# EUROPÄISCHE PATENTSCHRIFT

(11) **EP 4 469 758 B1**
(45) Veröffentlichungstag und Bekanntmachung des Hinweises auf die Patenterteilung: **01.10.2025**
(21) Anmeldenummer: 23701944.3
(22) Anmeldetag: 24.01.2023
(51) Int. Cl.: G01D 11/24

(54) **ELEKTRONISCHER SENSOR ZUR ERFASSUNG EINES UMWELTPARAMETERS**
ELECTRONIC SENSOR FOR SENSING AN ENVIRONMENTAL PARAMETER
CAPTEUR ÉLECTRONIQUE POUR DÉTECTER UN PARAMÈTRE ENVIRONNEMENTAL

(30) Priorität: 25.01.2022 DE 102022200787
(43) Veröffentlichungstag der Anmeldung: 04.12.2024
(73) Patentinhaber: Fraunhofer-Gesellschaft zur Förderung der angewandten Forschung e.V., 80686 München (DE)
(72) Erfinder: SCHOLZ, Oliver, 91058 Erlangen (DE); TRUPP, Sabine, 80686 München (DE)
(74) Vertreter: Schlenker, Julian
(86) Internationale Anmeldenummer: PCT/EP2023/051678
(87) Internationale Veröffentlichungsnummer: WO 2023/144141

(56) Entgegenhaltungen:
- EP-A1- 2 924 724
- EP-A1- 3 243 855
- JP-A- H03 138 551
- US-A1- 2009 303 071
- US-A1- 2013 140 649
- US-A1- 2015 347 713
- US-A1- 2016 341 622

## Beschreibung

Ausführungsbeispiele der vorliegenden Erfindung beziehen sich auf einen elektronischen Sensor zur Erfassung eines Umweltparameters. Einige Ausführungsbeispiele beziehen sich auf einen Bodensensor zur Erfassung von Bodenparametern beispielsweise im Agrarbereich, wie z.B. Bodentemperatur, Bodenfeuchte, Leitfähigkeit oder ähnlichem.

Elektronische Sensoren zur Erfassung von Umweltparametern werden in vielen Bereichen eingesetzt, wie beispielsweise in Naturschutzgebieten zur Erfassung von z.B. Klimawandel bedingten Veränderungen von Umweltparametern oder aber auch als Bodensensoren zur Erfassung von Bodenparametern z.B. im Agrarbereich.

Herkömmlicherweise umfassen solche elektronische Sensoren eine Elektronik, die üblicherweise aus einem Sensorelement, einer Spannungsversorgung und einer Verarbeitungseinheit mit angeschlossenem Speicher oder Sendeelement besteht.

Im Falle von Bodensensoren erfolgt die Erfassung von Bodenparametern entweder bodennah an der Bodenoberfläche oder vergraben im Boden, was u.a. beim Einsatz im Agrarbereich zu mehreren, teil gravierenden, Problemen führt.

Bei der Einbringung von Sensorik in den Boden besteht grundsätzlich das Risiko, dass die Elektronik nach Ablauf der Nutzungszeit im Boden verbleibt und die in der Elektronik üblicherweise verwendeten Materialien (insbesondere des Energiespeichers) langfristig die Umwelt schädigen. Die Bereitschaft der Landwirte, Elektronik in den Acker einzubringen, ist daher naturgemäß niedrig, da die Elektronik teilweise aus umweltschädlichen Materialien besteht, die den Boden und das Grundwasser nachhaltig vergiften können. Das betrifft insbesondere die Batterien zur Stromversorgung, aber auch bei der (problematischen) Solarversorgung oder anderen Formen des Energy Harvesting muss die Energie gespeichert werden, was üblicherweise durch Elektrolytkondensatoren erfolgt, die früher oder später auslaufen. Weiterhin laufen diese Geräte beim Befahren des Ackers oder beim Pflügen immer Gefahr, beschädigt zu werden, so dass diese Materialien austreten. Selbst vergossene Elektronik ist davor nicht immun, wobei Landwirte in der Regel keinen vergossenen Sondermüll auf dem Acker wünschen.

Vergleichbare Probleme bestehen beim Einsatz von elektronischen Sensoren in anderen Bereichen, wie z.B. bei der Überwachung von Naturschutzgebieten.

Die US 2013/140649 A1 beschreibt flüchtige Geräte, darunter aktive und passive Geräte, die sich bei Anwendung von mindestens einem internen und/oder externen Reiz elektrisch und/oder physikalisch verändern.

Der vorliegenden Erfindung liegt somit die Aufgabe zugrunde einen elektronischen Sensor zu schaffen, der in der Umwelt verbleiben kann und/oder einfach wieder aus der Umwelt entfernt werden kann.

Diese Aufgabe wird durch die unabhängigen Patentansprüche gelöst.

Bevorzugte Weiterbildungen finden sich in den abhängigen Patentansprüchen.

Ausführungsbeispiele der vorliegenden Erfindung schaffen einen elektronischen Sensor, der einfach wieder aus der Umwelt zu entfernen ist und/oder der weitestgehend frei von schädlichen Materialien ist, so dass sich die Elektronik nach einer vordefinierten Zeit abbaut und kontrolliert verrottet, sollte diese in der Umwelt verbleiben.

Ausführungsbeispiele schaffen einen elektronischen Sensor [z.B. Bodensensor] zur Erfassung zumindest eines Umweltparameters [z.B. Temperatur, Feuchtigkeit, Leitfähigkeit, Druck], wobei eine elektronische Schaltung des elektronischen Sensors zu zumindest 90% aus
- umweltverträglich verrottbaren Materialien, und/oder
- umweltverträglich nicht-verrottbaren oder schwer verrottbaren Materialien besteht,
so dass der elektronische Sensor nach einer vordefinierten Nutzungsdauer von 24 bis 60 Monaten in umweltverträgliche Rückstände verfällt.

Bei Ausführungsbeispielen können die umweltverträglich verrottbaren Materialien eines oder mehrere der folgenden Materialien sein:
- verrottbares leitfähiges Polymer,
- verrottbares Polymer,
- Fasern pflanzlicher Herkunft [z.B. Papier],
- Harz,
- biologisch abbaubarer Kunststoff.

Bei Ausführungsbeispielen können die umweltverträglich nicht-verrottbaren oder schwer verrottbaren Materialien eines oder mehrere der folgenden Materialien sein:
- Eisen,
- Gold,
- Keramik,
- Silizium.

Bei Ausführungsbeispielen kann der elektronische Sensor frei von folgenden Materialien sein:
- Lithium,
- Zink,
- Nickel,
- Cadmium,
- Zinn.

Bei Ausführungsbeispielen kann der elektronische Sensor keine Batterie aufweisen.

Bei Ausführungsbeispielen kann der elektronische Sensor ausschließlich aus umweltverträglich verrottbaren Materialien und umweltverträglich nicht-verrottbaren Materialien bestehen.

Bei Ausführungsbeispielen kann der elektronische Sensor ein Gehäuse aufweisen, das ausgebildet ist, um die elektronische Schaltung während der vorgegebenen Nutzungsdauer vor einer Verrottung zu schützten.

Bei Ausführungsbeispielen kann das Gehäuse ausgebildet sein, um nach der vorgegebenen Nutzungsdauer umweltverträglich zu verrotten.

Bei Ausführungsbeispielen kann das Gehäuse aus einem oder mehreren der folgenden Materialien bestehen:
- Fasern pflanzlicher Herkunft,
- verrottbarem Polymer.

Bei Ausführungsbeispielen kann die elektronische Schaltung einen umweltverträglich verrottbaren Energiespeicher aufweisen.

Bei Ausführungsbeispielen kann die elektronische Schaltung eine verrottbare Polymerfolie als Träger aufweisen.

Bei Ausführungsbeispielen kann die elektronische Schaltung Leiterbahnen aus verrottbarem leitfähigem Polymer oder Eisen aufweisen.

Bei Ausführungsbeispielen kann die elektronische Schaltung einen Siliziumchip aufweisen, wobei der Siliziumchip Anschlusspins aus verrottbarem leitfähigem Polymer, Eisen oder Gold aufweist, oder wobei der Siliziumchip Anschlussdrähte aus Gold aufweist, die auf einen Träger der elektronischen Schaltung gebondet sind.

Bei Ausführungsbeispielen kann die elektronische Schaltung eine aufgewickelte, verrottbare Polymerfolie mit Leiterbahnen aus leitfähigem verrottbarem Polymer als Sende- und/oder Empfangsspule aufweisen.

Bei Ausführungsbeispielen kann die Sende- und/oder Empfangsspule einen Kern aus Eisen aufweisen.

Bei Ausführungsbeispielen kann der zumindest eine Umweltparameter eine Temperatur, eine Feuchtigkeit, eine Leitfähigkeit oder ein Druck sein.

Bei Ausführungsbeispielen kann der elektronische Sensor ein Bodensensor sein, der ausgebildet ist, um in einen Boden eingebracht zu werden, um zumindest einen Bodenparameter als den zumindest einen Umweltparameter zu erfassen.

Bei Ausführungsbeispielen kann der Bodenparameter eine Bodentemperatur, eine Bodenfeuchte oder eine Bodenleitfähigkeit sein.

Bei Ausführungsbeispielen kann der elektronische Sensor eine Selbstzerstörungseinrichtung zur zumindest teilweisen Zerstörung des Gehäuses aufweisen, wobei der elektronische Sensor ausgebildet ist, um nach der vorgegebenen Nutzungsdauer oder ansprechend auf einen Empfang eines Selbstzerstörungssignals die Selbstzerstörungseinrichtung anzusteuern das Gehäuse zumindest teilweise zu zerstören [z.B. um so den Verrottungsprozess bzw. Verfallsprozess einzuleiten].

Bei Ausführungsbeispielen kann die Selbstzerstörungseinrichtung ausgebildet sein, um das Gehäuse durch eine thermische Einwirkung oder mechanische Einwirkung zumindest teilweise zu zerstören.

Bei Ausführungsbeispielen kann die Selbstzerstörungseinrichtung eine Schmelzsicherung oder Zündkapsel aufweisen.

Weitere Ausführungsbeispiele schaffen einen elektronischen Sensor zur Erfassung zumindest eines Umweltparameters, wobei eine elektronische Schaltung des elektronischen Sensors zu zumindest 90% aus
- umweltverträglich verrottbaren Materialien, und/oder
- umweltverträglich nicht-verrottbaren oder umweltverträglich schwer verrottbaren Materialien besteht, wobei der elektronische Sensor ein Gehäuse aufweist, das ausgebildet ist, um die elektronische Schaltung während einer Nutzungsdauer vor einer Verrottung zu schützen, wobei der elektronische Sensor eine Selbstzerstörungseinrichtung zur zumindest teilweisen Zerstörung des Gehäuses aufweist, wobei der elektronische Sensor ausgebildet ist, um nach einer vorgegebenen Nutzungsdauer oder ansprechend auf einen Empfang eines Selbstzerstörungssignals die Selbstzerstörungseinrichtung anzusteuern das Gehäuse zumindest teilweise zu zerstören [z.B. so dass der elektronische Sensor in umweltverträgliche Rückstände verfällt bzw. um so den Verrottungsprozess bzw. Verfallsprozess einzuleiten].

Weitere Ausführungsbeispiele schaffen einen Bodensensor zur Erfassung eines Bodenparameters, wobei eine elektronische Schaltung des Bodensensors zu zumindest 90% aus
- umweltverträglich verrottbaren Materialien, und/oder
- umweltverträglichen nicht-verrottbaren oder schwer verrottbaren Materialien besteht,
so dass der Bodensensor nach einer vordefinierten Nutzungsdauer von 24 bis 60 Monaten kontrolliert verrottet und im Boden verbleiben kann.

Bei Ausführungsbeispielen können die umweltverträglich verrottbaren Materialien eines oder mehrere der folgenden Materialien sein:
- leitfähiges Polymer,
- Polymer,
- Fasern pflanzlicher Herkunft,
- Harz,
- biologisch abbaubarer Kunststoff.

Bei Ausführungsbeispielen können die umweltverträglich nicht-verrottbaren oder schwer verrottbaren Materialien eines oder mehrere der folgenden Materialien sein:
- Eisen,
- Gold,
- Keramik,
- Silizium.

Bei Ausführungsbeispielen kann der Bodensensor eine magnetische Komponente aufweisen, um eine Extraktion aus dem Boden mittels eines Magneten zu ermöglichen.

Bei Ausführungsbeispielen kann die magnetische Komponente ein Eisenkern oder ein magnetischer Spulenkern sein.

Weitere Ausführungsbeispiele schaffen ein Verfahren zum Extrahieren eines Bodensensors gem. einem der hierin Beschriebenen Ausführungsbeispiele aus dem Boden, wobei das Verfahren aufweist: Extrahieren des Bodensensors mittels eines Magneten aus dem Boden [z.B. durch Sieben des Bodens unter Verwendung des Magneten].

Ausführungsbeispiele der vorliegenden Erfindung werden bezugnehmend auf die beiliegenden Figuren näher beschrieben. Es zeigen:
- Fig. 1: eine schematische Ansicht eines elektronischen Sensors zur Erfassung eines Umweltparameters, gemäß einem Ausführungsbeispiel der vorliegenden Erfindung,
- Fig. 2: eine schematische Ansicht einer elektronische Schaltung, gemäß einem Ausführungsbeispiel der vorliegenden Erfindung, und
- Fig. 3: eine schematische Ansicht eines elektronischen Sensors zur Erfassung eines Umweltparameters, gemäß einem weiteren Ausführungsbeispiel der Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

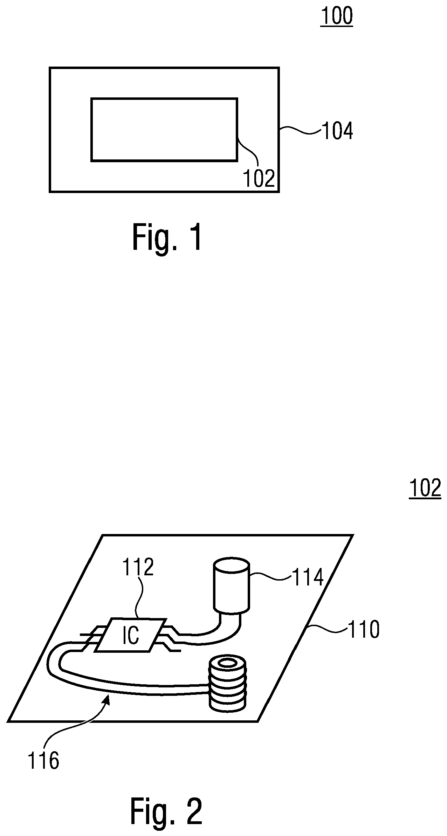

Fig. 1 zeigt eine ein schematische Ansicht eines elektronischen Sensors 100 zur Erfassung eines Umweltparameters (z.B. Temperatur, Feuchtigkeit, Leitfähigkeit oder Druck), gemäß einem Ausführungsbeispiel der vorliegenden Erfindung. Der elektronischen Sensor 100 umfasst eine elektronische Schaltung 102, wobei die elektronische Schaltung 102 zu zumindest 90% (oder 92% oder 95% oder 97% oder 99%) aus
- umweltverträglich verrottbaren Materialien, und/oder
- umweltverträglich nicht-verrottbaren oder schwer verrottbaren Materialien besteht,
so dass der elektronische Sensor 100 nach einer vordefinierten Nutzungsdauer in umweltverträgliche Rückstände verfällt, wie z.B. nach einer Nutzungsdauer im Bereich von 24 bis 60 Monaten (oder 12 bis 60 Monaten, oder 24 bis 48 Monaten, oder 12 bis 48 Monaten).

Bei Ausführungsbeispielen können die umweltverträglich verrottbaren Materialien biologisch abbaubare Materialien sein, wie beispielsweise Materialien, die durch Mikroorganismen (z.B. mittels Enzymen) zersetzbar sind.

Bei Ausführungsbeispielen können die umweltverträglich verrottbaren (z.B. biologisch abbaubaren) Materialien eines oder mehrere der folgenden Materialien sein:
- verrottbares leitfähiges Polymer, wie z.B. mit einem leitfähigen Material (z.B. Eisen) beschichtetes Polymer,
- verrottbares Polymer,
- Fasern pflanzlicher Herkunft, wie z.B. Papier,
- Harz,
- biologisch abbaubarer Kunststoff, wie z.B. Mais basierter Kunststoff.

Bei Ausführungsbeispielen können die die umweltverträglich nicht-verrottbaren oder schwer verrottbaren Materialien eines oder mehrere der folgenden Materialien sein:
- Eisen,
- Gold,
- Keramik,
- Silizium.

Bei Ausführungsbeispielen kann der der elektronische Sensor 100 ausschließlich aus umweltverträglich verrottbaren Materialien und umweltverträglich nicht-verrottbaren oder schwer verrottbaren Materialien bestehen.

Bei Ausführungsbeispielen kann der elektronische Sensor 100 frei von folgenden Materialien sein:
- Lithium,
- Zink,
- Nickel,
- Cadmium,
- Zinn.

Bei Ausführungsbeispielen kann der elektronische Sensor frei von einer Batterie sein.

Bei Ausführungsbeispielen kann der elektronische Sensor 100 ein Gehäuse 104 aufweisen, das ausgebildet ist, um die elektronische Schaltung 102 während der vorgegebenen Nutzungsdauer vor einer Verrottung zu schützen und um nach der vorgegebenen Nutzungsdauer umweltverträglich zu verrotten.

Bei Ausführungsbeispielen kann das Gehäuse 104 aus einem umweltverträglich verrottbaren Material bestehen, wie z.B. aus Fasern pflanzlicher Herkunft und/oder verrottbarem Polymer.

Wie bereits erwähnt kann der elektronische Sensor 100 ausgebildet sein, um nach einer gegebenen Nutzungsdauer von 24 bis 60 Monaten in umweltverträgliche Rückstände zu verfallen. Bei Ausführungsbeispielen kann dies dadurch erzielt werden, dass der elektronische Sensor 100 ein Gehäuse 104 aufweist, das die in dem Gehäuse 104 befindlichen Komponenten des elektronischen Sensors 100, wie z.B. die elektronische Schaltung 102, während der Nutzungsdauer zunächst vor einer Verrottung schützt, wobei das Gehäuse 104 nach der Nutzungsdauer umweltverträglich verrottet (z.B. sich auflöst). Durch die Verrottung des Gehäuses 104 werden die Komponenten des elektronischen Sensors 102 nicht mehr vor Umwelteinflüssen und somit nicht mehr vor einer Verrottung bzw. einem Verfall geschützt, so dass auch diese anfangen zu verrotten bzw. zu verfallen. Hierzu kann das Gehäuse 104 beispielsweise aus einem umweltverträglichen verrottbaren Material bestehen, wie z.B. aus einem verrottbaren Polymer und/oder Fasern pflanzlicher Herkunft.

Bei Ausführungsbeispielen kann das Gehäuse 104 auch zumindest teilweise aktiv zerstört werden, um die Verrottung bzw. den Verfall des elektronischen Sensors 100 auszulösen. Beispielsweise kann der elektronische Sensor 100 hierzu eine Selbstzerstörungseinrichtung aufweisen, die ausgebildet ist, um das Gehäuse 104 zumindest teilweise zu zerstören, um so den Verrottungsprozess bzw. Verfallsprozess einzuleiten, beispielsweise indem ein kleines Loch in dem Gehäuse gebildet wird, zum Beispiel durch thermische oder mechanische Einwirkung (Schmelzsicherung, Zündkapsel, usw.). Die Selbstzerstörung kann beispielsweise ausgelöst werden durch Ablauf einer vorgegebenen Zeit und/oder durch den Empfang eines Selbstzerstörungssignals.

Bei Ausführungsbeispielen kann die elektronische Schaltung 102 des elektronischen Sensors 100 zum Teil aus umweltverträglich verrottbaren Materialien und zum Teil aus umweltverträglich nicht-verrottbaren oder schwer verrottbaren Materialien bestehen. Nach der Nutzungsdauer verrottet das Gehäuse 104, wodurch die elektronische Schaltung 102 nicht mehr geschützt wird, wodurch wiederum die umweltverträglich verrottbaren Materialien der elektronischen Schaltung verrotten. Übrig bleiben dann nach der Verrotung als Rückstände die umweltverträglich nicht-verrottbaren oder schwer verrottbaren Materialien der elektronischen Schaltung. Bei diesen Rückständen handelt es sich bei Ausführungsbeispielen um umweltverträgliche Rückstände, wie z.B. Eisen, Gold, Keramik, und/oder Silizium.

Im folgenden werden Ausführungsbeispiele der elektronischen Schaltung 102 des elektronischen Sensor 100 anhand von Fig. 2 näher beschrieben.

Fig. 2 zeigt eine schematische Ansicht einer elektronische Schaltung 102, gemäß einem Ausführungsbeispiel der vorliegenden Erfindung.

Bei Ausführungsbeispielen kann die elektronische Schaltung 102 einen umweltverträglich verrottbaren Träger 110 aufweisen, wie z.B. eine verrottbare Polymerfolie oder einen Träger aus Fasern pflanzlicher Herkunft, wie z.B. Papier.

Bei Ausführungsbeispielen kann die elektronische Schaltung 102 einen Siliziumchip 112 aufweisen. Der Siliziumchip 112 kann ungehaust sein oder in einem umweltverträglich verrottbaren (z.B. biologisch abbaubaren) Material gehaust sein, wie z.B. Harz. Der Siliziumchip 112 kann Anschlusspins aus verrottbarem leitfähigem Polymer, Eisen oder Gold aufweisen. Die Anschlusspins können auf den Träger 110 gebondet sein. Die Bonddrähte können aus einem umweltverträglich nicht-verrottbaren oder schwer verrottbaren Materialien bestehen, wie z.B. Eisen oder Gold.

Bei Ausführungsbeispielen kann die elektronische Schaltung 102 einen umweltverträglich verrottbaren Energiespeicher aufweisen.

Beispielsweise kann der umweltverträglich verrottbare Energiespeicher ein umweltverträglich verrottbarer Kondensator 114 sein, wie z.B. ein keramischer Kondensator. Der Kondensator 114 kann Pins aus verrottbarem leitfähigem Polymer, Eisen oder Gold aufweisen.

Beispielweise kann der umweltverträglich verrottbare Energiespeicher ein umweltverträglich verrottbarer Elektrolytkondensator sein, der beispielsweise aus umweltfreundlichem (z.B. umweltverträglich verrottbaren) Elektrolyt und unverrottbarem und/oder umweltfreundlichen Anoden- und Kathodenmaterial besteht, wie z.B. verrottbarem Polymer, Gold, Eisen, etc.

Bei Ausführungsbeispielen kann die elektronische Schaltung 102 eine umweltverträglich verrottbare Sende- und/oder Empfangsspule aufweisen, wie z.B. eine aufgewickelte, verrottbare Polymerfolie mit Leiterbahnen aus leitfähigem verrottbarem Polymer. Die Sende- und/oder Empfangsspule kann einen Kern aus Eisen aufweisen.

Bei Ausführungsbeispielen kann die elektronische Schaltung 102 umweltverträglich verrottbare Leiterbahnen 116 aufweisen, wie z.B. Leiterbahnen aus verrottbarem leitfähigem Polymer oder Eisen.

Bei Ausführungsbeispielen kann die elektronische Schaltung 102 umweltverträglich verrottbare Wiederstände aufweisen. Die Wiederstände können beispielsweise durch Abschnitte von Leiterbahnen mit einem dünneren Querschnitt realisiert werden oder aber auch mittels leitfähigem Polymer.

Bei Ausführungsbeispielen kann der anhand von den Fig. 1 und 2 beschrieben elektronische Sensor beispielsweise ein Bodensensor sein, der ausgebildet sein kann, um einen Bodenparameter, wie z.B. Bodentemperatur, Bodenfeuchte oder Bodenleitfähigkeit zu erfassen.

Im Folgenden werden weitere Ausführungsbeispiele eines solchen Bodensensors näher beschrieben. Die nachfolgende Beschreibung ist aber in entsprechender Weise auch auf andere elektronische Sensoren anwendbar.

Ausführungsbeispiele schaffen einen elektronischer Sensor, der einfach wieder aus dem Boden zu entfernen ist, und der weitestgehend frei von schädlichen Materialien ist, so dass sich die Elektronik nach einer vordefinierten Zeit abbaut und kontrolliert verrottet, sollte sie im Boden verbleiben. Im Einzelnen kann dies wie im Folgenden beschrieben erreicht werden.

Bei Ausführungsbeispielen kann auf eine Batterie verzichtet werden, da diese meist mit schädlichen Metallen wie Lithium, Zink, Nickel, Cadmium oder ähnlichem realisiert wird. Stattdessen kann der Sensor, der z.B. nahe der Oberfläche in den Boden eingebracht wird, bei Ausführungsbeispielen induktiv durch ein elektrisches Feld versorgt werden. Ähnlich der NFC-Feld-Technologie kann mit einer Schreib-Lese-Spule mit der Elektronik kommuniziert und die benötigte Energie über dieses Feld an die Elektronik übertragen und dort gespeichert werden.

Bei Verwendung moderner Microcontroller liegt der Strombedarf im Schlafmodus im Bereich von Mikroampere und es ist üblicherweise ausreichend, diesen Schlafmodus nur für wenige Millisekunden im Laufe einer z.B. 24 Stunden Periode zu verlassen. Bei Ausführungsbeispielen werden daher für die Überbrückung dieser Periode bis zum nächsten Auslesen der Elektronik keramische Kondensatoren verwendet. Diese sind wenige Kubikmillimeter groß und können nach dem Ende der Verwendung als keramisches Element im Boden verbleiben wie eine Scherbe oder ein Stein. Aktuell erhältliche Kondensatoren sind an den Enden mit Zinn o.ä. kontaktiert, bei Ausführungsbeispielen wird stattdessen verrottbares, leitfähiges Polymer als Kontaktierung verwendet.

Neben Kondensatoren umfasst die Elektronik üblicherweise Widerständen und auf einer Epoxidharzplatine aufgebrachten Kupferbahnen. Bei Ausführungsbeispielen kann die Platine ersetzt werden beispielsweise durch eine verrottbare Polymerfolie, wobei die Trägerfolie isolierend sein kann und auf diese Leiterbahnen aus leitfähigem (ebenfalls verrottbarem) Polymer aufgebracht sein können. Bei Ausführungsbeispielen können Widerstände durch Variation des Leiterbahnquerschnitts und ggf. Lasertrimmung auf diese Weise hergestellt werden.

Der Microcontroller selbst ist in der Regel ein ca. zwei Kubikmillimeter großes Element, bestehend aus Silizium, Gold und (aktuell) Epoxidharz. Aktuell bestehen die Anschlussdrähte aus Kupfer. Bei Ausführungsbeispielen werden die Anschlussdrähte hingegen aus einem verrottbaren Material wie Eisen oder unschädlichem Metall wie Gold hergestellt. Eine weitere Möglichkeit besteht darin, den Siliziumchip direkt auf die Leiterfolie aufzubringen, wobei die Bonddrähte aus Gold direkt die Verbindung von Siliziumchip und Polymerfolie herstellen und das Silizium durch einen kleinen Tropfen Harz geschützt wird. Gem. Ausführungsbeispielen kann umweltfreundliches Harz verwendet werden, das für die Natur unproblematisch ist.

Bei Ausführungsbeispielen kann für den Empfang des Lade-/Schreib-/Lesefeldes eine Antennenspule vorgesehen sein, die derart ausgeführt werden kann, dass die flexible Polymerfolie derart aufgewickelt wird, dass auf diese Weise eine Empfangsspule entsteht. Sollte für höhere Induktivitäten (je nach Lesefrequenz) ein Spulenkern notwendig sein, könnte hier Eisen verwendet werden, das ebenfalls unter Wassereinfluss schnell verrostet.

Um die Elektronik wieder aus der Erde holen und einfach trennen zu können, kann gem. Ausführungsbeispielen Eisen oder der Spulenkern verwendet werden. Dann ist eine einfache Siebung des Erdreichs mit einem Magneten möglich.

Bei Ausführungsbeispielen kann die Verrottung bis zu einem definierten Zeitpunkt verschoben werden, indem die Elektronik in einem Behälter versiegelt wird, der sich erst nach einem (z.B. durch die Wandstärke) definierten Zeitraum von Monaten oder Jahren im Kontakt mit Wasser auflöst.

Ausführungsbeispiele der vorliegenden Erfindung ermöglichen es durch die konsequente Verwendung von Silizium, Keramik und leitfähigem sowie isolierendem Polymer, Gold/Eisen wo technisch notwendig sowie Harz, einen Bodensensor zu schaffen bzw. herzustellen, der den Verlauf von Bodenparametern über die Zeit erfasst, der einfach wieder aus dem Boden zu entfernen ist, und beim Verbleib im Boden nach wenigen Jahren in unproblematische Rückstände zerfällt.

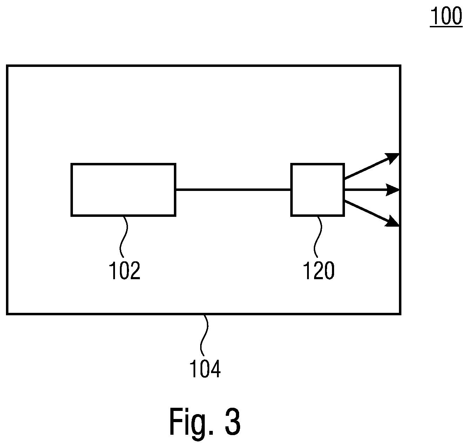

Fig. 3 zeigt eine schematische Ansicht eines elektronischen Sensors 100 zur Erfassung eines Umweltparameters (z.B. Temperatur, Feuchtigkeit, Leitfähigkeit oder Druck), gemäß einem weiteren Ausführungsbeispiel der vorliegenden Erfindung. Der elektronischen Sensor 100 umfasst eine elektronische Schaltung 102, ein Gehäuse 104 und eine Selbstzerstörungseinrichtung 120 zur zumindest teilweisen Zerstörung des Gehäuses (104).

Die elektronische Schaltung 102 besteht hierbei zu zumindest 90% (oder 92% oder 95% oder 97% oder 99%) aus
- umweltverträglich verrottbaren Materialien, und/oder
- umweltverträglich nicht-verrottbaren oder schwer verrottbaren Materialien.

Das Gehäuse 104 ist ausgebildet ist, um die elektronische Schaltung 102 während einer Nutzungsdauer vor einer Verrottung zu schützen.

Die elektronische Schaltung 102 ist ausgebildet, um nach einer vorgegebenen Nutzungsdauer (z.B. 24 bis 60 Monaten (oder 12 bis 60 Monaten, oder 24 bis 48 Monaten, oder 12 bis 48 Monaten)) oder ansprechend auf einen Empfang eines Selbstzerstörungssignals die Selbstzerstörungseinrichtung 120 anzusteuern das Gehäuse 104 zumindest teilweise zu zerstören, so dass der elektronische Sensor 100 in umweltverträgliche Rückstände verfällt.

Bei Ausführungsbeispielen kann die Selbstzerstörungseinrichtung 120 ein Loch in dem Gehäuse 104 bilden, um das Gehäuse 104 zumindest teilweise zu zerstören.

Bei Ausführungsbeispielen kann die Selbstzerstörungseinrichtung ausgebildet ist, um das Gehäuse durch eine thermische Einwirkung (z.B. mittels einer Schmelzsicherung oder eines Durchbrennen eines dünnen Drahtes) oder mechanische Einwirkung (z.B. mittels einer Zündkapsel oder eines spitzen Stifts) zumindest teilweise zu zerstören.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Elektronischer Sensor (100) zur Erfassung zumindest eines Umweltparameters,
wobei eine elektronische Schaltung (102) des elektronischen Sensors (100) zu zumindest 90% aus umweltverträglich
- verrottbaren Materialien, und/oder
- nicht-verrottbaren oder schwer verrottbaren Materialien besteht,
wobei der elektronische Sensor (100) ein Gehäuse (104) aufweist, das ausgebildet ist, um die elektronische Schaltung (102) während einer Nutzungsdauer vor einer Verrottung zu schützen,
wobei der elektronische Sensor (100) eine Selbstzerstörungseinrichtung zur zumindest teilweisen Zerstörung des Gehäuses (104) aufweist,
wobei der elektronische Sensor (100) ausgebildet ist, um nach einer vorgegebenen Nutzungsdauer oder ansprechend auf einen Empfang eines Selbstzerstörungssignals die Selbstzerstörungseinrichtung anzusteuern das Gehäuse (104) zumindest teilweise zu zerstören, so dass der elektronische Sensor in umweltverträgliche Rückstände verfällt.

2. Elektronischer Sensor (100) nach Anspruch 1,
wobei die umweltverträglich verrottbaren Materialien eines oder mehrere der folgenden Materialien sind:
- verrottbares leitfähiges Polymer,
- verrottbares Polymer,
- Fasern pflanzlicher Herkunft,
- Harz,
- biologisch abbaubarer Kunststoff,
und/oder wobei die umweltverträglich nicht-verrottbaren oder schwer verrottbaren Materialien eines oder mehrere der folgenden Materialien sind:
- Eisen,
- Gold,
- Keramik,
- Silizium.

3. Elektronischer Sensor (100) nach einem der vorangehenden Ansprüche,
wobei die Selbstzerstörungseinrichtung ausgebildet ist, um das Gehäuse (104) durch eine thermische Einwirkung oder mechanische Einwirkung zumindest teilweise zu zerstören,
und/oder wobei die Selbstzerstörungseinrichtung eine Schmelzsicherung oder Zündkapsel aufweist.

4. Elektronischer Sensor (100) nach einem der vorangehenden Ansprüche,
wobei der elektronische Sensor (100) frei von folgenden Materialien ist:
- Lithium,
- Zink,
- Nickel,
- Cadmium,
- Zinn,
und/oder wobei der elektronische Sensor (100) keine Batterie aufweist,
und/oder wobei der elektronische Sensor (100) ausschließlich aus umweltverträglich verrottbaren Materialien und umweltverträglich nicht-verrottbaren Materialien besteht.

5. Elektronischer Sensor (100) nach einem der vorangehenden Ansprüche,
wobei die elektronische Schaltung (102) einen umweltverträglich verrottbaren Energiespeicher (114) aufweist,
und/oder wobei die elektronische Schaltung (102) eine verrottbare Polymerfolie als Träger (110) aufweist,
und/oder wobei die elektronische Schaltung (102) Leiterbahnen (116) aus verrottbarem leitfähigem Polymer oder Eisen aufweist.

6. Elektronischer Sensor (100) nach einem der vorangehenden Ansprüche,
wobei die elektronische Schaltung (102) einen Siliziumchip (112) aufweist,
wobei der Siliziumchip (112) Anschlusspins aus verrottbarem leitfähigem Polymer, Eisen oder Gold aufweist,
oder wobei der Siliziumchip (112) Anschlussdrähte aus Gold aufweist, die auf einen Träger (110) der elektronischen Schaltung (102) gebondet sind.

7. Elektronischer Sensor (100) nach einem der vorangehenden Ansprüche,
wobei die elektronische Schaltung (102) eine aufgewickelte, verrottbare Polymerfolie mit Leiterbahnen aus leitfähigem verrottbarem Polymer als Sende- und/oder Empfangsspule aufweist.

8. Elektronische Sensor (100) nach dem vorangehenden Anspruch,
wobei die Sende- und/oder Empfangsspule einen Kern aus Eisen aufweist.

9. Elektronischer Sensor (100) nach einem der vorangehenden Ansprüche,
wobei der zumindest eine Umweltparameter eine Temperatur, eine Feuchtigkeit, eine Leitfähigkeit oder ein Druck ist.

10. Elektronischer Sensor (100) nach einem der vorangehenden Ansprüche,
wobei der elektronische Sensor (100) ein Bodensensor ist, der ausgebildet ist, um in einen Boden eingebracht zu werden, um zumindest einen Bodenparameter als den zumindest einen Umweltparameter zu erfassen.

11. Elektronischer Sensor (100) nach Anspruch 10,
wobei der Bodenparameter eine Bodentemperatur, eine Bodenfeuchte oder eine Bodenleitfähigkeit ist.

12. Elektronischer Sensor (100) nach einem der Ansprüche 10 bis 11,
wobei der Bodensensor nach einer vordefinierten Nutzungsdauer von 24 bis 60 Monaten kontrolliert verrottet und im Boden verbleiben kann

13. Elektronischer Sensor (100) nach einem der Ansprüche 10 bis 12,
wobei der Bodensensor eine magnetische Komponente aufweist, um eine Extraktion aus dem Boden mittels eines Magneten zu ermöglichen.

14. Elektronischer Sensor (100) nach Anspruch 13,
wobei die magnetische Komponente ein Eisenkern oder ein magnetischer Spulenkern ist.

15. Verfahren zum Extrahieren eines elektronischen Sensors nach einem der Ansprüche 13 oder 14 aus dem Boden, wobei der elektronische Sensor ein Bodensensor ist, wobei das Verfahren aufweist:
Extrahieren des Bodensensors mittels eines Magneten aus dem Boden.

## Claims

1. Electronic sensor (100) for detecting at least one environmental parameter,
wherein an electronic circuit (102) of the electronic sensor (100) consists of at least 90% environmentally compatible
- putrescible materials, and/or
- non-putrescible or hardly putrescible materials,
wherein the electronic sensor (100) comprises a housing (104) configured to protect the electronic circuit (102) from decomposing during a period of use,
wherein the electronic sensor (100) comprises a self-destruction device for at least partially destroying the housing (104),
wherein the electronic sensor (100) is configured to control the self-destruction device to at least partially destroy the housing (104) after a predetermined period of use or in response to receiving a self-destruction signal, so that the electronic sensor falls into environmentally compatible residues.

2. Electronic sensor (100) according to claim 1,
wherein the environmentally compatible putrescible materials are one or more of the following materials:
- putrescible conductive polymer,
- putrescible polymer,
- fibres of plant origin,
- resin,
- biodegradable plastic,
and/or wherein the environmentally compatible non-putrescible or hardly putrescible materials are one or more of the following materials:
- iron,
- gold,
- ceramic,
- silicon.

3. Electronic sensor (100) according to one of the preceding claims,
wherein the self-destruction device is configured to at least partially destroy the housing (104) by a thermal effect or mechanical effect,
and/or wherein the self-destruction device comprises a fuse or ignition cap.

4. Electronic sensor (100) according to one of the preceding claims,
wherein the electronic sensor (100) is free of the following materials:
- lithium,
- zinc,
- nickel,
- cadmium,
- tin,
and/or wherein the electronic sensor (100) does not comprise a battery,
and/or wherein the electronic sensor (100) consists exclusively of environmentally compatible putrescible materials and environmentally compatible non-putrescible materials.

5. Electronic sensor (100) according to one of the preceding claims,
wherein the electronic circuit (102) comprises an environmentally compatible putrescible energy store (114),
and/or wherein the electronic circuit (102) comprises a putrescible polymer film as carrier (110),
and/or wherein the electronic circuit (102) comprises conductive traces (116) of putrescible conductive polymer or iron.

6. Electronic sensor (100) according to one of the preceding claims,
wherein the electronic circuit (102) comprises a silicon chip (112),
wherein the silicon chip (112) comprises connecting pins of putrescible conductive polymer, iron or gold,
or wherein the silicon chip (112) comprises connecting wires of gold, which are bonded onto a carrier (110) of the electronic circuit (102).

7. Electronic sensor (100) according to one of the preceding claims,
wherein the electronic circuit (102) comprises a wound-up, putrescible polymer film with conductive traces of conductive putrescible polymer as transmitting and/or receiving coil.

8. Electronic sensor (100) according to the preceding claim,
wherein the transmitting and/or receiving coil comprises a core of iron.

9. Electronic sensor (100) according to one of the preceding claims,
wherein the at least one environmental parameter is a temperature, a humidity, a conductivity or a pressure.

10. Electronic sensor (100) according to one of the preceding claims,
wherein the electronic sensor (100) is a ground sensor which is configured to be introduced into a ground in order to detect at least one ground parameter as the at least one environmental parameter.

11. Electronic sensor (100) according to claim 10,
wherein the ground parameter is a ground temperature, a ground moisture or a ground conductivity.

12. Electronic sensor (100) according to one of claims 10 to 11,
wherein the ground sensor is decomposed in a controlled manner after a predefined period of use of 24 to 60 months and can remain in the ground.

13. Electronic sensor (100) according to one of claims 10 to 12,
wherein the ground sensor comprises a magnetic component in order to enable extraction from the ground by means of a magnet.

14. Electronic sensor (100) according to claim 13,
wherein the magnetic component is an iron core or a magnetic coil core.

15. Method for extracting an electronic sensor according to one of claims 13 or 14 from the ground, wherein the electronic sensor is a ground sensor, wherein the method comprises:
extracting the ground sensor from the ground by means of a magnet.

## Revendications

1. Capteur électronique (100) destiné à détecter au moins un paramètre environnemental,
dans lequel un circuit électronique (102) du capteur électronique (100) est constitué au moins à 90 % de matériaux respectueux de l'environnement,
- dégradables, et/ou
- non dégradables ou difficilement dégradables,
dans lequel le capteur électronique (100) présente un boîtier (104) qui est conçu pour protéger le circuit électronique (102) pendant une durée d'utilisation avant la décomposition,
dans lequel le capteur électronique (100) présente un moyen d'autodestruction destiné à détruire au moins partiellement le boîtier (104),
dans lequel le capteur électronique (100) est conçu pour actionner le moyen d'autodestruction après une durée d'utilisation prédéterminée ou en réponse à la réception d'un signal d'autodestruction afin de détruire au moins partiellement le boîtier (104) de telle sorte que le capteur électronique soit réduit en résidus respectueux de l'environnement.

2. Capteur électronique (100) selon la revendication 1,
dans lequel les matériaux dégradables respectueux de l'environnement sont un ou plusieurs des matériaux suivants :
- polymère conducteur dégradable,
- polymère dégradable,
- fibres d'origine végétale,
- résine,
- matière plastique biodégradable,
et/ou dans lequel les matériaux respectueux de l'environnement, non dégradables ou difficilement dégradables, sont un ou plusieurs des matériaux suivants :
- fer,
- or,
- céramique,
- silicium.

3. Capteur électronique (100) selon l'une des revendications précédentes,
dans lequel le moyen d'autodestruction est conçu pour détruire au moins partiellement le boîtier (104) par une action thermique ou une action mécanique,
et/ou dans lequel le moyen d'autodestruction présente un coupe-circuit fusible ou un détonateur.

4. Capteur électronique (100) selon l'une des revendications précédentes,
dans lequel le capteur électronique (100) est exempt des matériaux suivants :
- lithium,
- zinc,
- nickel,
- cadmium,
- étain,
et/ou dans lequel le capteur électronique (100) ne présente pas de batterie,
et/ou dans lequel le capteur électronique (100) est constitué exclusivement de matériaux dégradables respectueux de l'environnement et de matériaux non dégradables respectueux de l'environnement.

5. Capteur électronique (100) selon l'une des revendications précédentes,
dans lequel le circuit électronique (102) présente un moyen de stockage d'énergie dégradable respectueux de l'environnement (114),
et/ou dans lequel le circuit électronique (102) présente un film polymère dégradable en tant que support (110),
et/ou dans lequel le circuit électronique (102) présente des pistes conductrices (116) en polymère conducteur dégradable ou en fer.

6. Capteur électronique (100) selon l'une des revendications précédentes,
dans lequel le circuit électronique (102) présente une puce de silicium (112),
dans lequel la puce de silicium (112) présente des broches de connexion en polymère conducteur dégradable, en fer ou en or,
ou dans lequel la puce de silicium (112) présente des fils de connexion en or qui sont liés à un support (110) du circuit électronique (102).

7. Capteur électronique (100) selon l'une des revendications précédentes,
dans lequel le circuit électronique (102) présente un film polymère dégradable enroulé avec des pistes conductrices en polymère dégradable conducteur en tant que bobine émettrice et/ou réceptrice.

8. Capteur électronique (100) selon la revendication précédente,
dans lequel la bobine émettrice et/ou réceptrice présente un noyau en fer.

9. Capteur électronique (100) selon l'une des revendications précédentes,
dans lequel l'au moins un paramètre environnemental est une température, une humidité, une conductivité ou une pression.

10. Capteur électronique (100) selon l'une des revendications précédentes,
dans lequel le capteur électronique (100) est un capteur de sol qui est conçu pour être déposé dans un sol afin de détecter au moins un paramètre de sol en tant qu'au moins un paramètre environnemental.

11. Capteur électronique (100) selon la revendication 10,
dans lequel le paramètre de sol est une température de sol, une humidité de sol ou une conductivité de sol.

12. Capteur électronique (100) selon l'une des revendications 10 à 11,
dans lequel le capteur de sol se décompose de manière contrôlée après une durée d'utilisation prédéfinie de 24 à 60 mois et peut rester dans le sol.

13. Capteur électronique (100) selon l'une des revendications 10 à 12,
dans lequel le capteur de sol présente un composant magnétique pour permettre une extraction du sol à l'aide d'un aimant.

14. Capteur électronique (100) selon la revendication 13,
dans lequel le composant magnétique est un noyau de fer ou un noyau de bobine magnétique.

15. Procédé destiné à extraire du sol un capteur électronique selon l'une des revendications 13 ou 14, le capteur électronique étant un capteur de sol, dans lequel le procédé présente :
extraire du sol le capteur de sol à l'aide d'un aimant.
